# EUROPEAN PATENT APPLICATION

(11) **EP 4 757 138 A1**
(43) Date of publication of application: **10.06.2026**
(21) Application number: 24848217.6
(22) Date of filing: 29.07.2024
(51) Int. Cl.: H02K 9/00, F04C 11/00, F04C 15/00, H02K 9/19, H02K 9/197, H02K 7/14

(54) **ELECTRIC PUMP AND ELECTRIC PUMP ASSEMBLING METHOD**

(30) Priority: 28.07.2023 CN 202322018081 U; 25.08.2023 CN 202311084501; 31.08.2023 CN 202322366995 U
(71) Applicant: Zhejiang Sanhua Automotive Components Co., Ltd., Hangzhou, Zhejiang 310018 (CN)
(72) Inventor: ZHUO, Chengzhe, Hangzhou, Zhejiang 310018 (CN); ZHANG, Jun, Hangzhou, Zhejiang 310018 (CN); XIANG, Kaifeng, Hangzhou, Zhejiang 310018 (CN); ZHANG, Jiawei, Hangzhou, Zhejiang 310018 (CN)
(74) Representative: Maikowski & Ninnemann Patentanwälte Partnerschaft mbB
(86) International application number: PCT/CN2024/108086
(87) International publication number: WO 2025/026262

(57) **Abstract**

An electric pump. The electric pump comprises a rotor assembly, a pump shaft, a shaft limiting portion and an isolation sleeve, wherein the rotor assembly is located on the periphery of the pump shaft, and the pump shaft is fixedly connected to or limitingly connected to the shaft limiting portion; the shaft limiting portion comprises a first welding part, the isolation sleeve comprises a bottom portion, the bottom portion comprises a second welding part, and the first welding part and the second welding part are fixed by means of welding; the bottom portion has a first end face and a second end face, and in an axial direction parallel to the electric pump, the first end face is close to the shaft limiting portion relative to the second end face; the area of the projection of the second welding part on the first end face is smaller than the area of the projection of the shaft limiting portion on the first end face, and a distance is present between the second welding part and the second end face. The present application further discloses an electric pump assembling method. The present application has the characteristic of reducing the leakage risk.

## Description

The present application claims priorities to the following Chinese Patent Applications, which are incorporated herein by reference in there entireties:
1) Chinese Patent Application No. 202322366995.0, titled "ELECTRIC PUMP", filed with the China National Intellectual Property Administration on August 31, 2023;
2) Chinese Patent Application No. 202322018081.5, titled "ELECTRIC PUMP", filed with the China National Intellectual Property Administration on July 28, 2023; and
3) Chinese Patent Application No. 202311084501.8, titled "ELECTRIC PUMP AND ELECTRIC PUMP ASSEMBLING METHOD", filed with the China National Intellectual Property Administration on August 25, 2023.

### FIELD

The present application relates to the field of vehicles, and in particular to components for a vehicle lubrication system and/or a vehicle cooling system.

### BACKGROUND

The electric pump includes an isolation sleeve, which is configured to isolate the stator assembly and the rotor assembly, thereby preventing contact between the working medium and the stator assembly during the operation of the electric pump. The electric pump further includes a shaft position-limiting part, which is welded to the isolation sleeve. Due to the relatively thin wall thickness of the isolation sleeve, excessive welding energy may cause damage to the isolation sleeve, posing a leakage risk for the electric pump. Therefore, how to reduce the leakage risk is a technical issue.

### SUMMARY

In view of this, an object of the present application is to provide an electric pump that facilitates reducing the leakage risk.

To achieve the above object, the following technical solutions are adopted in one embodiment of the present application.

An electric pump includes a rotor assembly, a pump shaft, a shaft position-limiting part and an isolation sleeve. The rotor assembly is arranged around an outer periphery of the pump shaft, and the pump shaft is connected to the shaft position-limiting part in a fixed manner or in a position-limited manner. The shaft position-limiting part includes a first welding part, and the isolation sleeve includes a bottom. The bottom includes a second welding part, which is welded and fixed to the first welding part. The bottom includes a first end face and a second end face. In a direction parallel to the axial direction of the electric pump, the first end face is positioned closer to the shaft position-limiting part than the second end face, and an area of a projection of the second welding part onto the first end face is smaller than that of a projection of the shaft position-limiting part onto the first end face. Additionally, there is a distance between the second welding part and the second end face.

In the above technical solution, in the direction parallel to the axial direction of the electric pump, the area of the projection of the second welding part onto the first end face is smaller than that of the projection of the shaft position-limiting part onto the first end face, and there is a distance between the second welding part and the second end face. When the isolation sleeve is fixedly connected to the shaft position-limiting part, there is a relatively small contact area between the bottom and the shaft position-limiting part, requiring less energy for welding. In the direction parallel to the axial direction of the electric pump, at least a portion of the bottom remains unmelted and thus undamaged, thereby facilitating a reduction in the leakage risk.

The following technical solutions are further disclosed according to an embodiment of the present application. A method for assembling an electric pump includes:
obtaining a shaft position-limiting part and an isolation sleeve; and
fixedly connecting the shaft position-limiting part to the isolation sleeve, which involves welding and fixing a first welding part of the shaft position-limiting part to a second welding part of the isolation sleeve, so that a portion of a bottom of the isolation sleeve is melted in a direction parallel to the axial direction of the electric pump during welding.

In the above technical solutions, when welding and fixing the first welding part of the shaft position-limiting part to the second welding part of the isolation sleeve, a portion of the bottom of the isolation sleeve is melted in the direction parallel to the axial direction of the electric pump, so that at least a portion of the bottom remains undamaged, thereby favorably reducing the leakage risk.

### BRIEF DESCRIPTION OF THE DRAWINGS

FIG. 1 is a schematic view of an electric pump according to an embodiment of the present application;
FIG. 2 is a schematic cross-sectional view of the electric pump shown in FIG. 1;
FIG. 3 is a schematic view showing the fixation of an isolation sleeve, a pump shaft and a shaft position-limiting part in FIG. 2 from a first perspective;
FIG. 4 is a schematic view showing the fixation of the isolation sleeve, the pump shaft and the shaft position-limiting part in FIG. 2 from a second perspective;
FIG. 5 is a schematic cross-sectional view of a first embodiment taken along line A-A in FIG. 4;
FIG. 6 is an enlarged schematic view of portion A in FIG. 5;
FIG. 7 is a schematic view of a shaft position-limiting part shown in FIG. 5 from a first perspective;
FIG. 8 is a schematic cross-sectional view of the shaft position-limiting part shown in FIG. 7;
FIG. 9 is a schematic view showing a first embodiment of the shaft position-limiting part in FIG. 5 from a perspective;
FIG. 10 is a schematic view showing a second embodiment of the shaft position-limiting part in FIG. 5 from a perspective;
FIG. 11 is a schematic cross-sectional view of a second embodiment taken along line A-A in FIG. 4;
FIG. 12 is an enlarged schematic view of portion A in FIG. 11;
FIG. 13 is a schematic view of the isolation sleeve in FIG. 4;
FIG. 14 is a schematic view showing a first embodiment of the isolation sleeve in FIG. 13 from a perspective;
FIG. 15 is a schematic view showing a second embodiment of the isolation sleeve in FIG. 13 from a perspective;
FIG. 16 is a schematic view of an electric pump according to an embodiment of the present application;
FIG. 17 is a schematic cross-sectional view of the electric pump shown in FIG. 16;
FIG. 18 is a schematic view showing the fixation of an isolation sleeve, a pump shaft and a shaft position-limiting part in FIG. 17 from a first perspective;
FIG. 19 is a schematic view showing the fixation of the isolation sleeve, the pump shaft and the shaft position-limiting part in FIG. 17 from a second perspective;
FIG. 20 is a schematic cross-sectional view taken along line A-A in FIG. 19;
FIG. 21 is a schematic view of the shaft position-limiting part shown in FIG. 18 from a first perspective;
FIG. 22 is a schematic view of the shaft position-limiting part shown in FIG. 18 from a second perspective;
FIG. 23 is a schematic cross-sectional view of the shaft position-limiting part shown in FIG. 22;
FIG. 24 is a schematic view showing another embodiment of the fixation of the isolation sleeve, the pump shaft and the shaft position-limiting part;
FIG. 25 is a schematic view showing the fixation of the shaft position-limiting part and the pump shaft in FIG. 24;
FIG. 26 is a schematic view showing yet another embodiment of the fixation of the isolation sleeve, the pump shaft and the shaft position-limiting part;
FIG. 27 is a schematic cross-sectional view showing an embodiment of the shaft position-limiting part;
FIG. 28 is a schematic cross-sectional view showing an embodiment of the shaft position-limiting part;
FIG. 29 is a schematic cross-sectional view showing an embodiment of the shaft position-limiting part;
FIG. 30 is a schematic cross-sectional view showing an embodiment of the shaft position-limiting part;
FIG. 31 is a schematic perspective structural view showing a first embodiment of the electric pump of the present application;
FIG. 32 is a schematic cross-sectional view showing the first embodiment of the electric pump in FIG. 31 taken along line X-X;
FIG. 33 is a schematic perspective structural view of the shaft sleeve in the first embodiment of the electric pump in FIG. 32 from a perspective;
FIG. 34 is a schematic cross-sectional view showing a second embodiment of the electric pump in FIG. 31 taken along line X-X;
FIG. 35 is a schematic cross-sectional view showing a third embodiment of the electric pump in FIG. 31 taken along line X-X;
FIG. 36 is a schematic cross-sectional view showing a fourth embodiment of the electric pump in FIG. 31 taken along line X-X;
FIG. 37 is a schematic cross-sectional view showing a fifth embodiment of the electric pump in FIG. 31 taken along line X-X;
FIG. 38 is a schematic cross-sectional view showing the embodiment of the electric pump in FIG. 32 taken along line Y-Y; and
FIG. 39 is a schematic enlarged view of portion I in FIG. 38.

Numeral references in the drawings are listed as follows:
1 pump casing; 111 pump casing body; 1111 inlet; 1112 outlet; 1113 support part; 1114 bypass channel; 112 motor housing; 113 bottom cover;
2 stator assembly;
3 isolation sleeve; 32 bottom; 321 first end face; 3211 first inner end face; 3212 first outer end face; 322 second end face; 30 isolation chamber;
12 rotating assembly; 41 permanent magnet; 121 rotor assembly; 1211 rotor part; 1212 injection-molded part; 1212a first part; 1212b second part; 122 impeller assembly; 1221 inflow channel; 123 shaft sleeve; 1231 first shaft sleeve; 1231a upper wall part; 1232 second shaft sleeve; 1232a lower wall part; 124 position-limiting hole; 1241 wall of position-limiting hole;
31 bottom wall; 311 first sub-bottom wall; 312 second sub-bottom wall;
5 pump shaft; 51 first section; 52 second section; 53 third section; 151 axial hole; 152 transverse hole; 153 upper end; 154 lower end; 155 outer wall part; 156 vertical hole; 157 transverse groove;
6 control assembly; 141 base plate; 142 electronic component;
7 shaft position-limiting part; 70 accommodation cavity; 71 fixing portion; 72 base; 721 third end face; 7211 third inner end face; 7212 third outer end face; 722 bottom;
73 connecting portion; 75 flow hole; 731 first flow hole; 732 second flow hole;
74 connecting portion; 741 first connecting sub-portion; 742 second connecting sub-portion;
8 welding part; 81 first welding part; 811 first welding protrusion; 82 second welding part; 821 second welding protrusion; 10 first chamber; 20 second chamber; 18 backflow channel; 181 overflow channel; 1811 first overflow channel; 1812 second overflow channel; 1813 wall part of the flow channel; 182 internal flow channel; 19 water-flow groove; 20 rotor chamber; 201 bottom; 21 pin; 22 pump chamber; 2211 rotor chamber; 2212 impeller chamber.

### DETAILED DESCRIPTION OF THE EMBODIMENTS

The present application is further described below in conjunction with the accompanying drawings and specific embodiments.

In order to enable those skilled in the art to better understand the technical solutions of the present application, the present application is further described in detail below in conjunction with the accompanying drawings and specific embodiments. Obviously, the accompanying drawings described below show only some embodiments of the present application. For those ordinary skilled in the art, other accompanying drawings can be obtained based on these accompanying drawings without creative effort. The orientation terms such as "upper" and "lower" herein are defined based on the relative positions of the components shown in the accompanying drawings, only for the purpose of clearly and conveniently expressing the technical solutions. It should be understood that the orientation terms used herein should not limit the scope of protection claimed in the present application.

The electric pump of the present application can be applied to a liquid circulation system. The electric pump can drive the liquid in the circulation system to flow. The fluid may be the lubricating oil of the lubrication system or the coolant of the cooling system. The present application takes the electric pump applied to the cooling circulation system as an example.

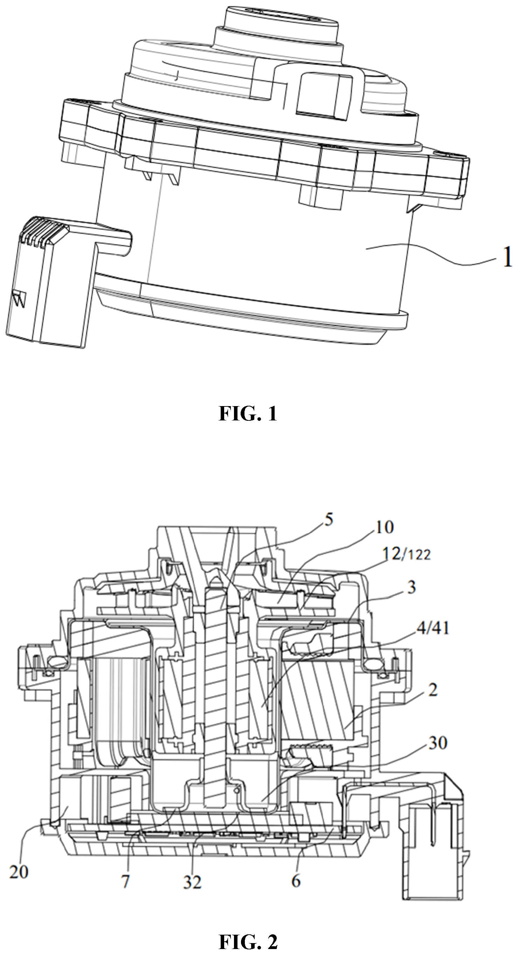

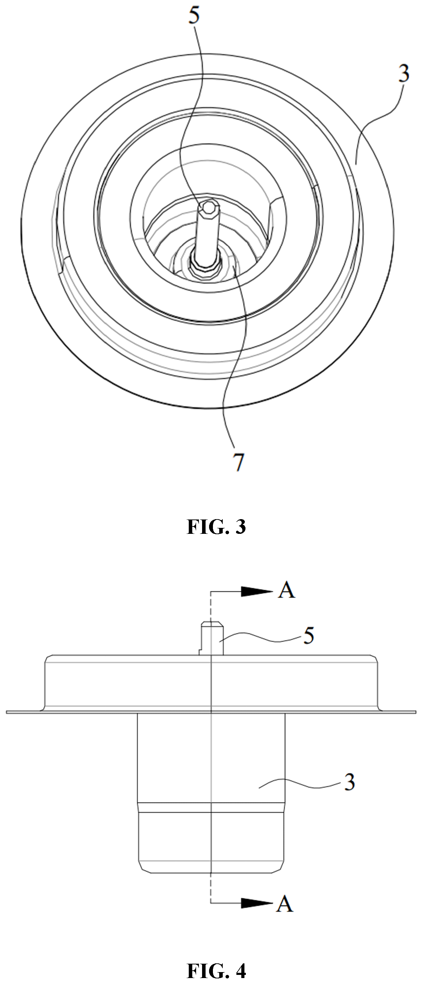

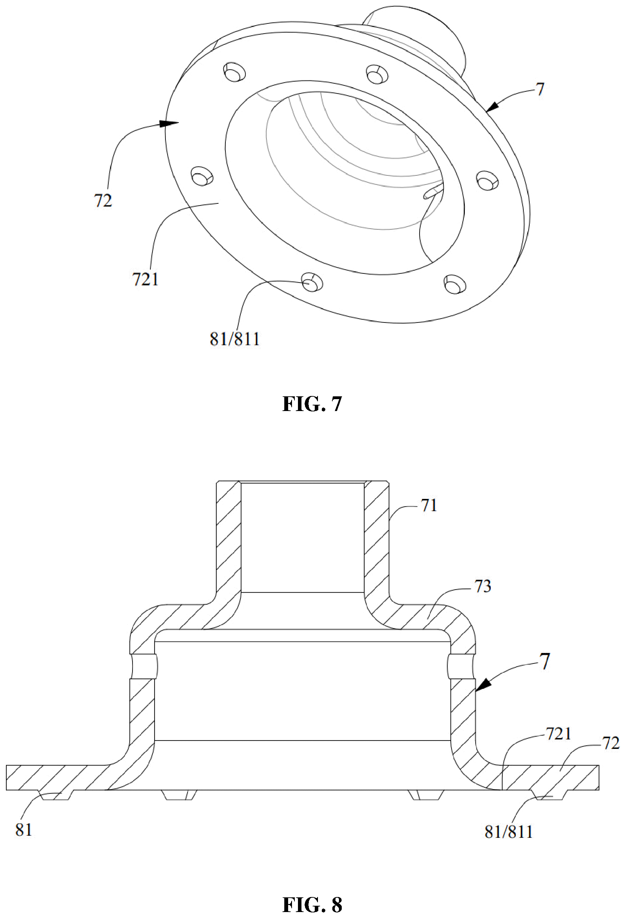

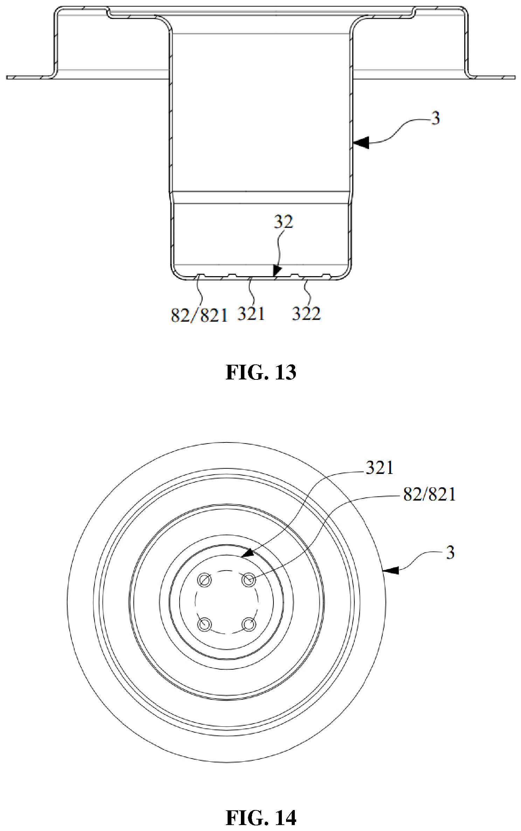

Referring to FIGS. 1 to 15, an electric pump includes a pump casing 1, a stator assembly 2, an isolation sleeve 3, a rotating assembly 12, a pump shaft 5 and a control assembly 6. The pump housing 1 defines a pump inner chamber, which includes a first chamber 10 and a second chamber 20. The first chamber 10 is not in communication with the second chamber 20. During the operation of the electric pump, a working medium flows through the first chamber 10, and the second chamber 20 does not come into direct contact with the working medium. The rotating assembly 12 and at least a portion of the pump shaft 5 are located in the first chamber 10. At least a portion of the stator assembly 2 and at least a portion of the control assembly 6 are located in the second chamber 20. The stator assembly 2 and the control assembly 6 do not come into contact with the working medium, which facilitates avoiding short circuit. The rotating assembly 12 is arranged around an outer periphery of the pump shaft 5, and the stator assembly 2 is electrically connected to the control assembly 6. The rotating assembly 12 includes a permanent magnet 41 and an impeller assembly 42. During the operation of the electric pump, the control assembly 6 is configured to control a current passing through the stator assembly 2 and thus control an excitation magnetic field generated by the stator assembly 2. The rotating assembly 12 is rotated around the pump shaft 5 or together with the pump shaft 5 under the action of the excitation magnetic field.

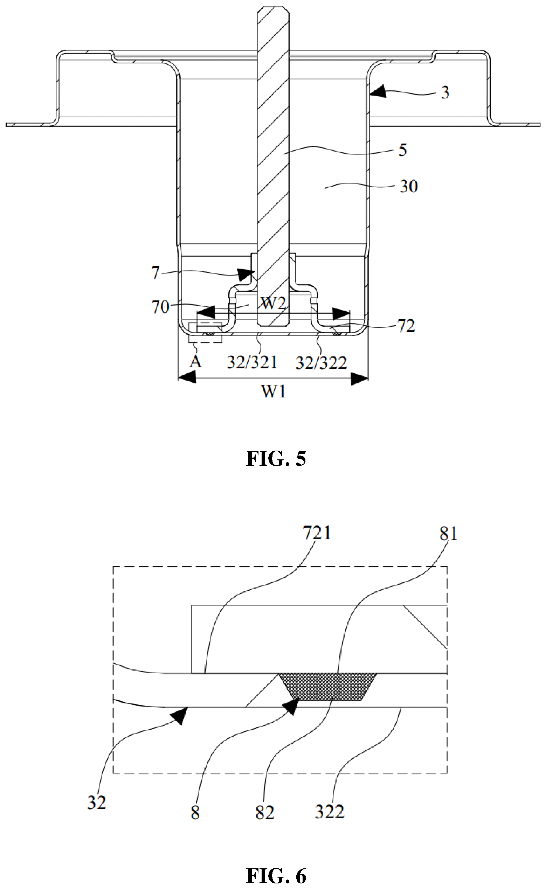

Referring to FIGS. 5 to 15, the electric pump further includes a shaft position-limiting part 7, which is fixedly or position-limitedly connected to the pump shaft 5. The shaft position-limiting part 7 includes a first welding part 81, and the isolation sleeve 3 includes a bottom 32. The bottom 32 includes a second welding part 82, which is welded and fixed to the first welding part 81. The bottom 32 has a first end face 321 and a second end face 322. In a direction parallel to an axial direction of the electric pump, the first end face 321 is closer to the shaft position-limiting part 7 than the second end face 322, and an area of a projection of the second welding part 82 onto the first end face 321 is smaller than that of a projection of the shaft position-limiting part 7 onto the first end face 321. Additionally, there is a distance between the second welding part 82 and the second end face 322. When welding the isolation sleeve 3 to the shaft position-limiting part 7, there is a relatively small contact area between the bottom 32 and the shaft position-limiting part 7, requiring less energy for welding. There is a distance between the second welding part 82 and the second end face 322 in the direction parallel to the axial direction of the electric pump, so that at least a portion of the bottom 32 remains unmelted and thus undamaged, thereby lowering the leakage risk. In this embodiment, the projection of the second welding part 82 onto the first end face 321 overlaps with the projection of the shaft position-limiting part 7 onto the first end face 321. The approach for welding the shaft position-limiting part 7 to the isolation sleeve 3 includes, but is not limited to, resistance welding, friction welding or hot-melt welding. The electric pump includes a welding part 8, through which the shaft position-limiting part 7 and the isolation sleeve 3 are fixedly connected. The welding part 8 is a melt formed during the welding of the shaft position-limiting part 7 to the isolation sleeve 3, and the welding part 8 includes a first welding part 81 and a second welding part 82.

The shaft position-limiting part 7 may be a stamped part or a machined part. Furthermore, the shaft position-limiting part 7 is a thin-walled stamped part, which offers relatively high production efficiency and relatively low cost. The isolation sleeve 3 may be a stamped part or a machined part. Furthermore, the isolation sleeve 3 is a thin-walled stamped part, which provides a relatively high production efficiency and relatively low cost.

The isolation sleeve 3 and the shaft position-limiting part 7 are made of the same type of material. For example, the isolation sleeve 3 and the shaft position-limiting part 7 are both made of metal materials. Further, both the isolation sleeve 3 and the shaft position-limiting part 7 are made of stainless steel, which has a high hardness and is resistant to rusting even after long-term exposure to the working medium (such as water). It may effectively protect the components mounted within the isolation chamber 30 and will not affect the water quality. In addition, it has resistance to cracking and ageing over long-term use and exhibits a high pressure-bearing strength.

In one embodiment, referring to FIGS. 5 to 10, the shaft position-limiting part 7 has a third end face 721. An extension direction of the first end face 321 is parallel to that of the third end face 721. The first welding part 81 extends from the third end face 721 in a direction away from the shaft position-limiting part 7, without reaching the second end face 322. When welding the isolation sleeve 3 to the shaft position-limiting part 7, in the direction parallel to the axial direction of the electric pump, at least a portion of the bottom 32 remains unmelted and thus undamaged, thereby reducing the leakage risk.

The first welding part 81 has a first distance in the direction parallel to the axial direction of the electric pump, and the first distance may be understood as a height of the first welding part 81 in the axial direction. A distance from the first end face 321 to the second end face 322 is defined as a second distance, which may be understood as a thickness from the first end face 321 to the second end face in the axial direction. A ratio of the first distance to the second distance ranges from 0.6 to 2. If the ratio of the first distance to the second distance is greater than 2, a large amount of energy would be required to melt the first welding part 81. During the welding of the isolation sleeve 3 to the shaft position-limiting part 7, the isolation sleeve 3 might be punctured, leading to a leakage risk for the isolation sleeve 3. If the ratio of the first distance to the second distance is less than 0.6, a small amount of energy is sufficient to melt the first welding part 81, so that the fixing strength between the shaft position-limiting part 7 and the isolation sleeve 3 may be relatively weak. After the shaft position-limiting part 7 is welded to the isolation sleeve 3, the reinforcement effect on the bottom 32 of the isolation sleeve 3 is relatively weak, making the isolation sleeve 3 prone to deformation under applied forces. In a radial direction of the electric pump, a width of the first welding part 81 ranges from 0.5 millimeters to 2 millimeters. When the shaft position-limiting part 7 is welded to the isolation sleeve 3, this width ensures an optimal contact area between the first welding part 81 and the first end face 321, thereby achieving high connection strength between the shaft position-limiting part 7 and the isolation sleeve 3.

In an embodiment, referring to FIGS. 5, 9 and 10, along the direction parallel to the axial direction of the electric pump, an area of a projection of the first welding part 81 onto the third end face 721 is smaller than an area of the third end face 721. The first welding part 81 includes several first welding protrusions 811, which protrude from the third end face 721 in the direction away from the shaft position-limiting part 7. A projection of each first welding protrusion 811 onto the third end face 721 is circular or polygonal in shape; or alternatively, the line connecting the projections of the first welding protrusions 811 onto the third end face 721 defines a circle or polygon. When welding the isolation sleeve 3 to the shaft position-limiting part 7, energy may be concentrated at the first welding protrusions 811, so that the welding of the isolation sleeve 3 to the shaft position-limiting part 7 may be achieved with less energy. In addition, the welding time is short and production efficiency is high. Furthermore, the connection strength between the isolation sleeve 3 and the shaft position-limiting part 7 is relatively high. In other embodiments, the projection of the first welding part 81 onto the third end face 721 is circular or polygonal in shape. In an embodiment, the third end face 721 includes a third inner end face 7211 and a third outer end face 7212. The first welding part 81 extends from the third end face 721 in the direction away from the shaft position-limiting part 7. In the radial direction of the shaft position-limiting part 7, the third outer end face 7212 is located radially outside the third inner end face 7211, and the first welding part 81 is located between the third inner end face 7211 and the third outer end face 7212. The area of the projection of the first welding part 81 onto the third end face 721 is smaller than an area of the third outer end face 7212. When welding the isolation sleeve 3 to the shaft position-limiting part 7, energy may be concentrated at the first welding part 81, and the fixing strength between the isolation sleeve 3 and the shaft position-limiting part 7 is relatively high. In addition, compared with welding the third end face 721 to the first end face 321, the energy demand is relatively small. In the direction parallel to the axial direction of the electric pump, the area of the projection of the first welding part 81 onto the first end face 321 is smaller than the area of the first end face 321. This configuration may fully ensure a large contact area between the first welding part 81 and the first end face 321, thereby enhancing the welding strength. Alternatively, the area of the first end face 321 of the bottom 32 is defined as a first area, and the area of the projection of the first welding part 81 onto the first end face 321 is defined as a second area, with the first area being larger than the second area. This configuration may fully ensure a large contact area between the first welding part 81 and the first end face 321, thereby improving the welding strength.

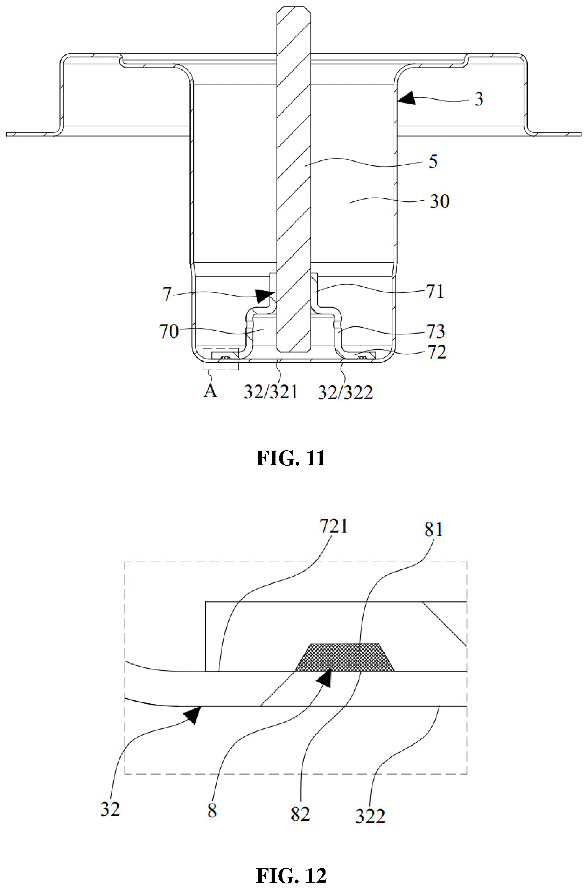

In an embodiment, referring to FIGS. 11 to 15, the shaft position-limiting part 7 has a third end face 721. An extension direction of the first end face 321 is parallel to that of the third end face 721, and the second welding part 82 extends from the first end face 321 in a direction away from the second end face 322. When welding the isolation sleeve 3 to the shaft position-limiting part 7, in the direction parallel to the axial direction of the electric pump, at least a portion of the bottom 32 remains unmelted and thus undamaged, thereby lowering the leakage risk.

The shaft position-limiting part 7 includes a base 72, which has a third end face 721. In the direction parallel to the axial direction of the electric pump, a thickness of the second welding part 82 is less than that of the base 72. Furthermore, the thickness of the second welding part 82 is 0.3 to 0.7 times that of the base 72 in the direction parallel to the axial direction of the electric pump. On one hand, this design ensures strong connection strength between the shaft position-limiting part 7 and the isolation sleeve 3. On the other hand, it requires a moderate amount of energy during welding of the isolation sleeve 3 to the shaft position-limiting part 7, thereby facilitating energy conservation.

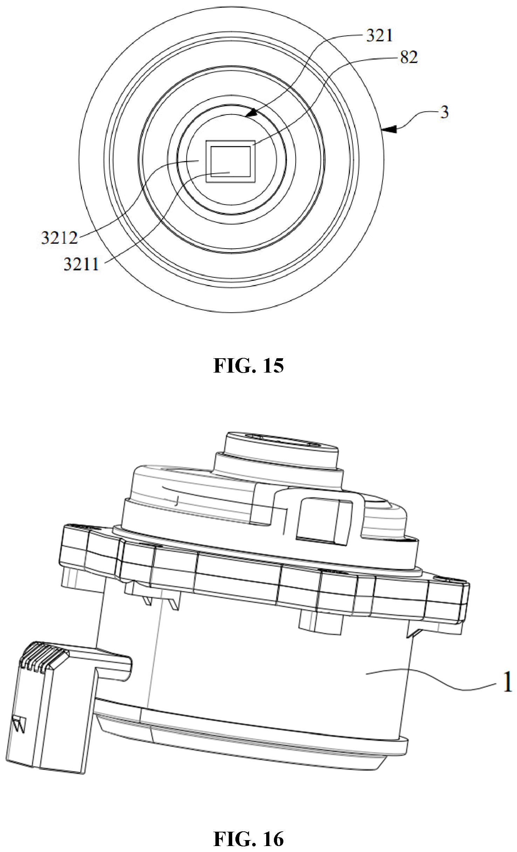

In an embodiment, referring to FIGS. 11, 14 and 15, the area of the projection of the second welding part 82 onto the first end face 321 is smaller than the area of the first end face 321 in the direction parallel to the axial direction of the electric pump. The second welding part 82 includes several second welding protrusions 821, which protrude from the first end face 321 in a direction away from the bottom 32. A projection of each second welding protrusion 821 onto the first end face 321 is circular or polygonal in shape; or alternatively, a line connecting the projections of the second welding protrusions 821 onto the first end face 321 defines a circle or polygon. When welding the isolation sleeve 3 to the shaft position-limiting part 7, energy may be concentrated at the second welding protrusions 821, so that the welding of the isolation sleeve 3 to the shaft position-limiting part 7 may be achieved with less energy. In addition, the welding time is short and the production efficiency is high. Furthermore, the connection strength between the isolation sleeve 3 and the shaft position-limiting part 7 is relatively high. In other embodiments, the projection of the second welding part 82 onto the first end face 321 is circular or polygonal in shape. In an embodiment, referring to FIG. 15, the first end face 321 includes a first inner end face 3211 and a first outer end face 3212. The second welding part 82 extends from the first end face 321 in the direction away from the shaft position-limiting part 7. In the radial direction of the shaft position-limiting part 7, the first outer end face 3212 is located radially outside the first inner end face 3211, and the second welding part 82 is located between the first inner end face 3211 and the first outer end face 3212. The area of the projection of the second welding part 82 onto the first end face 321 is smaller than an area of the first outer end face 3212. When welding the isolation sleeve 3 to the shaft position-limiting part 7, energy may be concentrated at the second welding part 82, and the fixing strength between the isolation sleeve 3 and the shaft position-limiting part 7 is relatively high. In addition, compared with welding the third end face 721 to the first end face 321, the energy demand is relatively small. In the direction parallel to the axial direction of the electric pump, an area of a projection of the second welding part 82 onto the third end face 721 is smaller than the area of the third end face 721. This configuration may fully ensure a large contact area between the second welding part 82 and the third end face 721, thereby improving the welding strength. Alternatively, the area of the third end face 721 of the shaft position-limiting part 7 is defined as a first area, and the area of the projection of the second welding part 82 onto the third end face 721 is defined as a second area, with the first area being larger than the second area. This configuration may fully ensure a large contact area between the second welding part 82 and the third end face 721, thereby enhancing the welding strength.

Referring to FIGS. 2 to 15, the shaft position-limiting part 7 covers a portion of the first end face 321. The shaft position-limiting part 7 includes a base 72, which has a third end face 721. In the direction parallel to the axial direction of the electric pump, the thickness of the isolation sleeve 3 is less than that of the base 72. Furthermore, the thickness of the bottom 32 is less than that of the base 72. Since the bottom 32 is closer to the control assembly 6 than the base 72 in the direction parallel to the axial direction of the electric pump, the heat generated by the control assembly 6 is transferred to the bottom 32. Due to the relatively thin thickness of the bottom 32, the thermal conduction rate is relatively high, enabling rapid transfer of heat to the shaft position-limiting part 7. The outer surface of the shaft position-limiting part 7 comes into contact with the working medium, which facilitates enhancing the heat dissipation effect of the electric pump. For example, when both the bottom 32 and the base 72 are made of the same type of stainless steel, the thinner bottom 32 exhibits a relatively high thermal conductivity, allowing the bottom 32 to rapidly transfer heat to the shaft position-limiting part 7 (or the base 72). The outer surface and at least a portion of the inner surface of the shaft position-limiting part 7 may come into contact with the working medium, which facilitates enhancing the heat dissipation effect of the electric pump. In the radial direction of the electric pump, a width of the bottom 32 (or the first end face 321) is defined as a first width W1, and the maximum width of the shaft position-limiting part 7 is defined as a second width W2, with the first width being greater than the second width. Furthermore, the second width is 0.5 to 0.9 times the first width. For instance, if the first width is 30mm, the second width ranges from 15mm to 27mm. Furthermore, the second width is 0.6 to 0.8 times the first width. This configuration allows for a relatively large contact area between the bottom 32 and the shaft position-limiting part 7, which facilitates enhancing the connection strength between the shaft position-limiting part 7 and the isolation sleeve 3. After the shaft position-limiting part 7 is fixed to the isolation sleeve 3, it effectively increases the thickness of a portion of the bottom 32, which enhances the deformation resistance of the bottom 32 of the isolation sleeve 3, ensuring that the isolation sleeve 3 is less susceptible to deformation under applied forces.

In this embodiment, referring to FIGS. 5 to 15, the shaft position-limiting part 7 includes a fixing portion 71, a connecting portion 73 and a base 72. The connecting portion 73 is connected to the fixing portion 71 and the base 72. The fixing portion 71 is fixedly or position-limitedly connected to the pump shaft 5. The base 72 is welded and fixed to the isolation sleeve 3. The base 72 extends from the connecting portion 73 in a direction away from the pump shaft 5, which allows for a relatively large contact area between the shaft position-limiting part 7 and the isolation sleeve 3. After the shaft position-limiting part 7 is fixed to the isolation sleeve 3, the thickness of part of the bottom 32 is effectively increased, which facilitates enhancing the deformation resistance of the bottom 32 of the isolation sleeve 3, ensuring that the isolation sleeve 3 is less susceptible to deformation under applied forces.

A method for assembling an electric pump includes:
obtaining a shaft position-limiting part 7 and an isolation sleeve 3.

The method for assembling the electric pump includes: preparing a welding part 8, which involves welding and fixing the shaft position-limiting part 7 to the isolation sleeve 3. Specifically, fixedly connecting the shaft position-limiting part 7 to the isolation sleeve 3 involves welding and fixing a first welding part 81 of the shaft position-limiting part 7 to a second welding part 82 of the isolation sleeve 3. During welding, a portion of a bottom 32 of the isolation sleeve 3 is melted in a direction parallel to the axial direction of the electric pump, so that at least a portion of the bottom 32 remains undamaged, which reduces the leakage risk.

The method for assembling the electric pump includes: obtaining a pump shaft 5, and fixedly or position-limitedly connecting the pump shaft 5 to the shaft position-limiting part 7. Fixedly or position-limitedly connecting pump shaft 5 to the shaft position-limiting part 7 allows a high degree of concentricity between the pump shaft 5 and the shaft position-limiting part 7. During the operation of the electric pump, the vibration amplitude of the pump shaft 5 is reduced, resulting in lower noise levels.

In an embodiment, when preparing the welding part 8 or fixedly connecting the shaft position-limiting part 7 to the isolation sleeve 3, a first welding electrode and a second welding electrode are provided. The first welding electrode comes into contact with the isolation sleeve 3, and the second welding electrode comes into contact with the pump shaft 5, with current being transmitted between the first welding electrode and the second welding electrode. One of the isolation sleeve 3 and the pump shaft 5 is connected to the positive electrode, and the other is connected to the negative electrode. After energization, the first welding part and the second welding part are melted, achieving a fixed connection between the isolation sleeve 3 and the shaft position-limiting part 7. In addition, since the welding is performed from the inside of the isolation sleeve 3, at least a portion of the isolation sleeve 3 remains undamaged, resulting in a relatively low leakage risk of the isolation sleeve 3.

Referring to FIG. 5 and FIG. 11, a gap is formed between the pump shaft 5 and a bottom wall (or the first end face 321) of the isolation sleeve 3 in the axial direction of the electric pump. That is to say, the pump shaft 5 does not come into contact with the first end face 321 of the isolation sleeve 3, or there is a certain distance between the pump shaft 5 and the first end face 321 of the isolation sleeve 3. For example, when resistance welding is employed to connect the isolation sleeve 3 to the shaft position-limiting part 7, if the pump shaft 5 comes into contact with the isolation sleeve 3, the current would flow directly from the pump shaft 5 to the isolation sleeve 3, thereby affecting the fixing effect between the isolation sleeve 3 and the shaft position-limiting part 7. In some embodiments, the shaft position-limiting part 7 has an accommodation cavity 70 that is in communication with the isolation chamber 30. During the operation of the electric pump, working medium is contained in the accommodation cavity 70, and at least a portion of the pump shaft 5 is located in the accommodation cavity 70. In the axial direction of the electric pump, the distance between the pump shaft 5 and the first end face 321 of the isolation sleeve 3 ranges from 0.2mm to 2mm. This configuration ensures the fixing effect between the isolation sleeve 3 and the shaft position-limiting part 7 while allowing for a relatively large contact area between the pump shaft 5 and the working medium. Alternatively, in other embodiments, the distance between the pump shaft 5 and the first end face 321 of the isolation sleeve 3 ranges from 0.2mm to 1mm. This configuration ensures the fixing effect between the isolation sleeve 3 and the shaft position-limiting part 7 while allowing for a relatively large contact area between the pump shaft 5 and the working medium. Furthermore, the distance between the pump shaft 5 and the first end face 321 of the isolation sleeve 3 ranges from 0.5 mm to 1 mm. This configuration ensures the fixing effect between the isolation sleeve 3 and the shaft position-limiting part 7 while allowing for a relatively large contact area between the pump shaft 5 and the working medium.

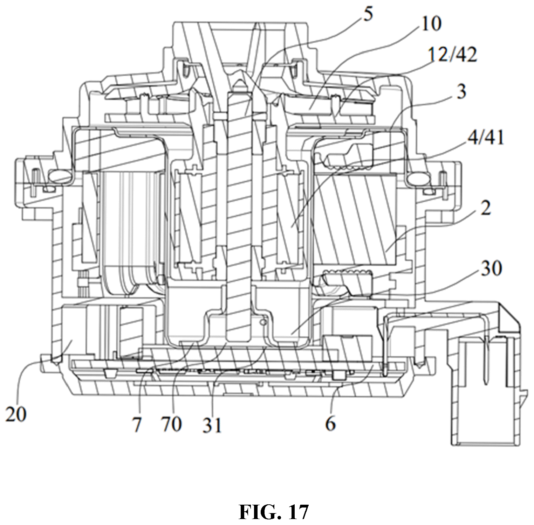

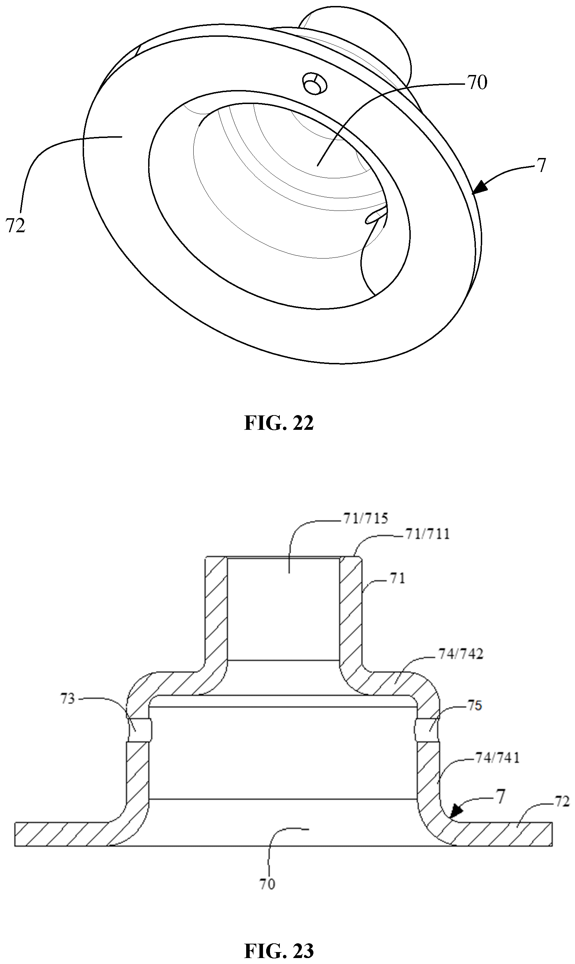

Referring to FIGS. 15 to 30, the electric pump includes a pump casing 1, a stator assembly 2, an isolation sleeve 3, a rotating assembly 12, a pump shaft 5 and a control assembly 6. The pump casing 1 defines a pump inner chamber, which includes a first chamber 10 and a second chamber 20. The first chamber 10 is not in communication with the second chamber 20. During the operation of the electric pump, a working medium flows through the first chamber 10, while no working medium flows through the second chamber 20. The rotating assembly 12 and at least a portion of the pump shaft 5 are located in the first chamber 10. At least a portion of the stator assembly 2 and at least a portion of the control assembly 6 are located in the second chamber 20. In this embodiment, the stator assembly 2 and the control assembly 6 are located in the second chamber 20. The stator assembly 2 and the control assembly 6 do not come into contact with the working medium, which facilitates avoiding short circuit. The rotating assembly 12 is arranged around an outer periphery of the pump shaft 5, and the stator assembly 2 is electrically connected to the control assembly 6. The rotating assembly 12 includes a permanent magnet 41 and an impeller assembly 42. During the operation of the electric pump, the control assembly 6 is configured to control a current passing through the stator assembly 2 and thus control an excitation magnetic field generated by the stator assembly 2. The rotating assembly 12 is rotated under the action of the excitation magnetic field. Specifically, the rotating assembly 12 is rotated around the pump shaft 5 or together with the pump shaft 5 under the action of the excitation magnetic field.

The electric pump further includes a shaft position-limiting part 7, which is fixedly or position-limitedly connected to the pump shaft 5. The shaft position-limiting part 7 is also fixedly or position-limitedly connected to the isolation sleeve 3 to achieve the fixation of the shaft position-limiting part 7. Specifically, the isolation sleeve 3 has a bottom wall 31, which is fixedly connected to the shaft position-limiting part 7.

In this embodiment, the pump inner chamber is divided by the isolation sleeve 3 into a first chamber 10 and a second chamber 20. The isolation sleeve 3 has an isolation chamber 30. The first chamber 10 includes the isolation chamber 30. An upper end of the isolation chamber 30 is open to facilitate the assembly of the rotating assembly 12. The rotating assembly 12 and at least a portion of the pump shaft 5 are located in the isolation chamber 30. The shaft position-limiting part 7 has an accommodation cavity 70, and the isolation sleeve 3 has the isolation chamber 30. The accommodation cavity 70 is in communication with the isolation chamber 30. When the electric pump is in operation, the working medium is contained in the isolation chamber 30, and since the accommodation cavity 70 is in communication with the isolation chamber 30, the working medium may also be present in the accommodation cavity 70. At least a portion of an inner wall and at least a portion of an outer wall of the shaft position-limiting part 7 are in contact with the working medium, resulting in a relatively large contact surface area between the shaft position-limiting part 7 and the working medium. This increases the heat dissipation area of the working medium, thereby favorably improving the heat dissipation effect of the electric pump. In addition, the shaft position-limiting part 7 has the accommodation cavity 70, so that the shaft position-limiting part 7 has a relatively light weight, thereby favorably reducing the weight of the electric pump.

The shaft position-limiting part 7 has at least one flow hole 75, which is in communication with both the isolation chamber 30 and the accommodation cavity 70. Referring to FIG. 15, FIG. 25, and FIGS. 27 to 29, the shaft position-limiting part 7 has at least two flow holes 75. The working medium within the isolation chamber 30 may flow into the accommodation cavity 70 through at least one of the flow holes 75, and similarly, the working medium within the accommodation cavity 70 may flow out of the accommodation cavity 70 through at least one of the flow holes 75. At least portions of both the inner and outer walls of the shaft position-limiting part 7 are in contact with the working medium, resulting in a relatively large contact surface area between the shaft position-limiting part 7 and the working medium. This increases the heat dissipation area of the working medium, thereby favorably improving the heat dissipation effect of the electric pump.

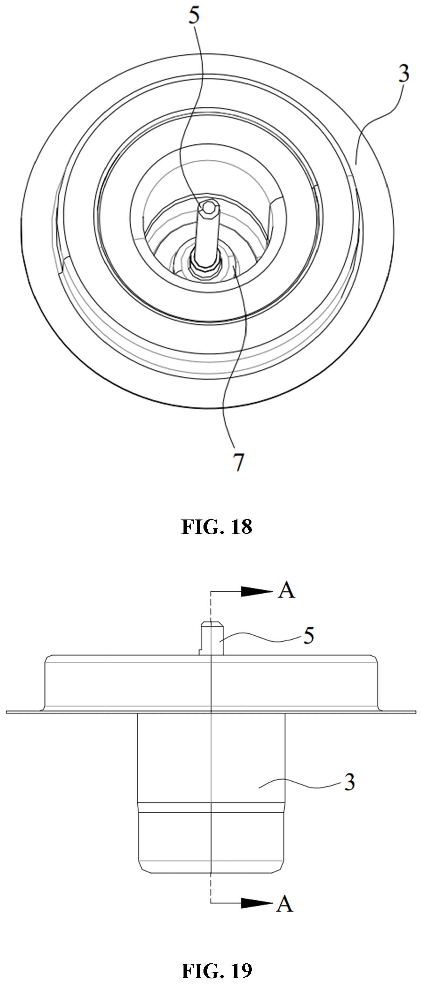

Referring to FIGS. 18 to 25, the shaft position-limiting part 7 includes a fixing portion 71, a base 72 and a connecting portion 74. The connecting portion 74 is connected to both the fixing portion 71 and the base 72. The fixing portion 71 is fixedly or position-limitedly connected to the pump shaft 5, and the base 72 is fixedly or position-limitedly connected to the isolation sleeve 3. The connecting portion 74 has a flow hole 75, which is in communication with both the isolation chamber 30 and the accommodation cavity 70.

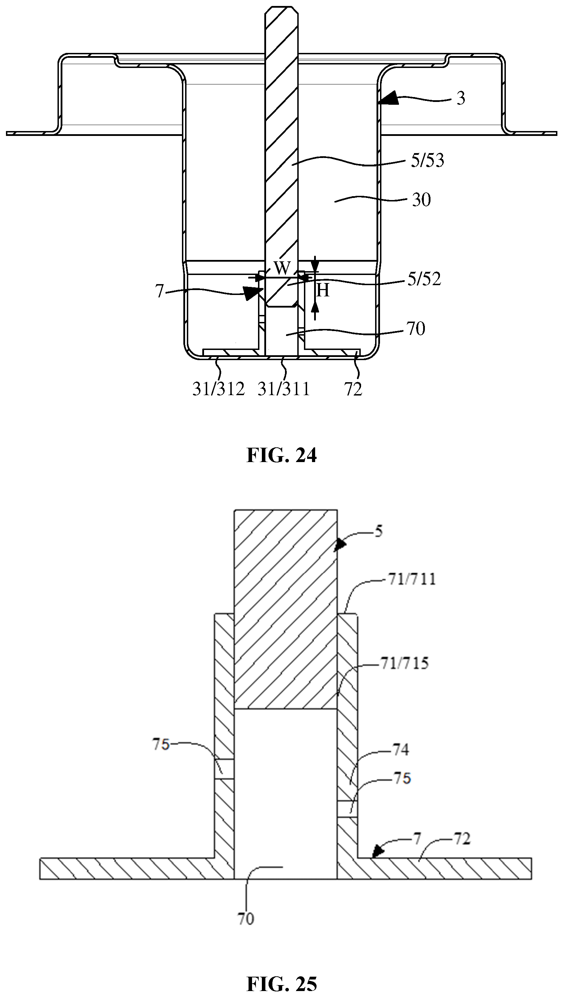

Referring to FIGS. 24 to 25, the isolation sleeve 3 has a bottom wall 31. The connecting portion 74 extends from the fixing portion 71 towards the bottom wall 31. The cavity wall of the accommodation cavity 70 includes an inner wall of the connecting portion 74 and a portion of the bottom wall 31. When the electric pump is in operation, a working medium is contained in the isolation chamber 30, and the working medium in the isolation chamber 30 may flow into the accommodation cavity 70. The inner wall of the connecting portion 74 and a portion of the bottom wall 31 may come into contact with the working medium. Additionally, the inner wall of the connecting portion 74 and at least a portion of the outer wall of the shaft position-limiting part 7 may come into contact with the working medium, resulting in a relatively large contact surface area between the shaft position-limiting part 7 and the working medium. This increases the heat dissipation area for the working medium, thereby favorably improving the heat dissipation effect of the electric pump. In an embodiment, the connecting portion 75 has at least two flow holes 75, which are arranged in a radial direction of the connecting portion 74. This allows the working medium to flow into and out of the accommodation cavity 70 almost simultaneously, resulting in a relatively fast circulation rate of the working medium and favorably enhancing the heat dissipation effect of the electric pump. In an embodiment, the flow holes 75 are arranged in an axial direction of the connecting portion 74. Since some of the flow holes 75 are relatively close to the bottom wall 31 in a direction parallel to the axial direction of the electric pump, the working medium may flow into the accommodation cavity 70 rapidly, which facilitates enhancing the heat exchange rate between the shaft position-limiting part 7 and the working medium.

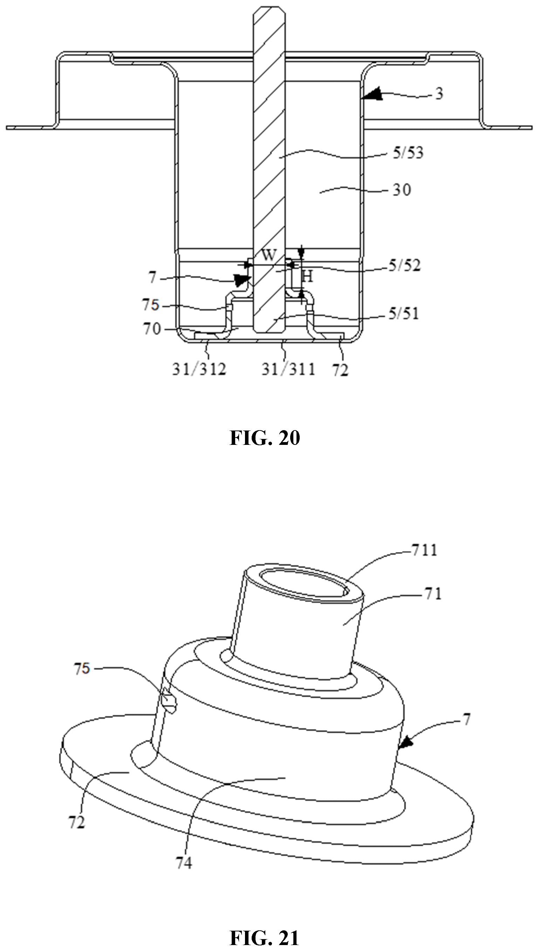

Referring to FIGS. 20 to 23, the connecting portion 74 includes a first connecting sub-portion 741 and a second connecting sub-portion 742, which are connected to each other. An extension direction of the first connecting sub-portion 741 is parallel to that of the fixing portion 71, and the extension direction of the first connecting sub-portion 741 is perpendicular to that of the second connecting sub-portion 742. The above configuration includes a case where there is a chamfered corner at the junction between the first connecting sub-portion 741 and the second connecting sub-portion 742. The cavity wall of the accommodation cavity 70 includes at least an inner wall of the first connecting sub-portion 741 and an inner wall of the second connecting sub-portion 742. Such a configuration enables the accommodation cavity 70 to have a larger volume, resulting in a larger heat dissipation area for the working medium and favorably enhancing the heat dissipation effect of the electric pump.

The first connecting sub-portion 741 has flow holes 75. Since the first connecting sub-portion 741 is relatively close to the bottom wall 31, the flow hole 75 in the first connecting sub-portion 741 allows the working medium to flow into the accommodation cavity 70 rapidly, thereby enhancing the heat exchange rate between the shaft position-limiting part 7 and the working medium. In an embodiment, the second connecting sub-portion 742 has flow holes 75. Since the second connecting sub-portion 742 is relatively farther away from the bottom wall 31, a larger amount of working medium may be accommodated in the accommodation cavity 70, which facilitates increasing the heat dissipation area for the working medium, thereby improving the heat dissipation effect of the electric pump. In an embodiment, the flow holes 75 include a first flow hole 731 and a second flow hole 732. The first connecting sub-portion 741 has the first flow hole 731, and the second connecting sub-portion 742 has the second flow hole 732. In the direction parallel to the axial direction of the electric pump, the first flow hole 731 is positioned farther away from the pump shaft 5 than the second flow hole 732, meaning that the minimum distance between the first flow hole 731 and the pump shaft 5 is greater than that between the second flow hole 732 and the pump shaft 5. Alternatively, the first flow hole 731 is positioned closer to the bottom wall 31 than the second flow hole 732 in the direction parallel to the axial direction of the electric pump. The working medium tends to flow into the accommodation cavity 70 through the first flow hole 731, which is relatively closer to the bottom wall 31. This allows the working medium to flow into the accommodation cavity 70 rapidly, improving the heat exchange rate between the shaft position-limiting part 7 and the working medium. Meanwhile, the working medium flows out of the accommodation cavity 70 through the second flow hole 732, which is relatively farther away from the bottom wall 31. This enables the accommodation cavity 70 to accommodate a larger amount of working medium, which facilitates increasing the heat dissipation area for the working medium, thereby favorably improving the heat dissipation effect of the electric pump.

Referring to FIGS. 20 to 26, the base 72 extends from the connecting portion 74 in a direction away from the pump shaft 5. The base 72 is fixedly or position-limitedly connected to the isolation sleeve 3. In the axial direction of the electric pump, a thickness of the base 72 is greater than that of the isolation sleeve 3, enabling the pump shaft position-limiting part 7 to have a certain structural strength.

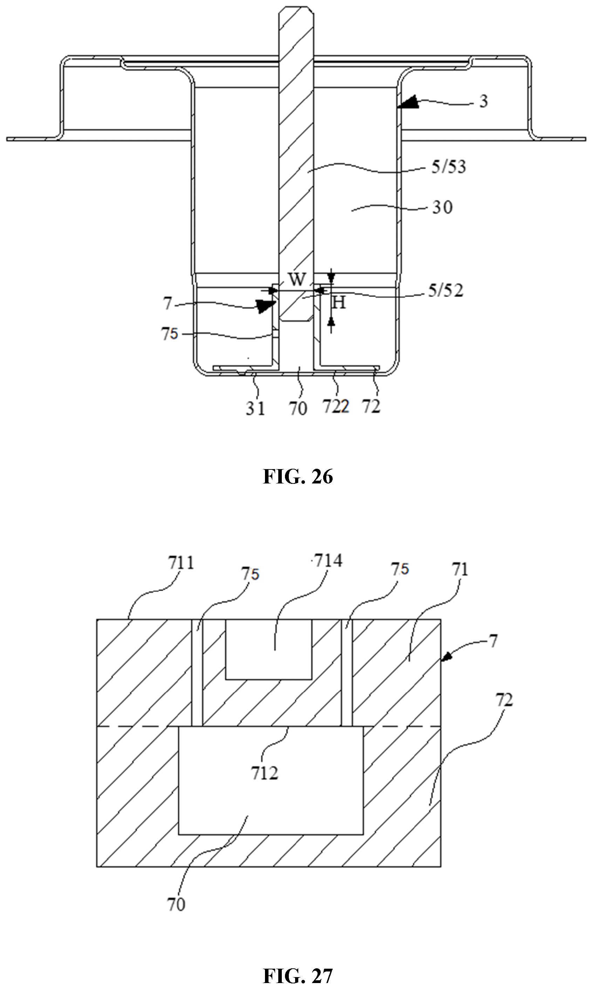

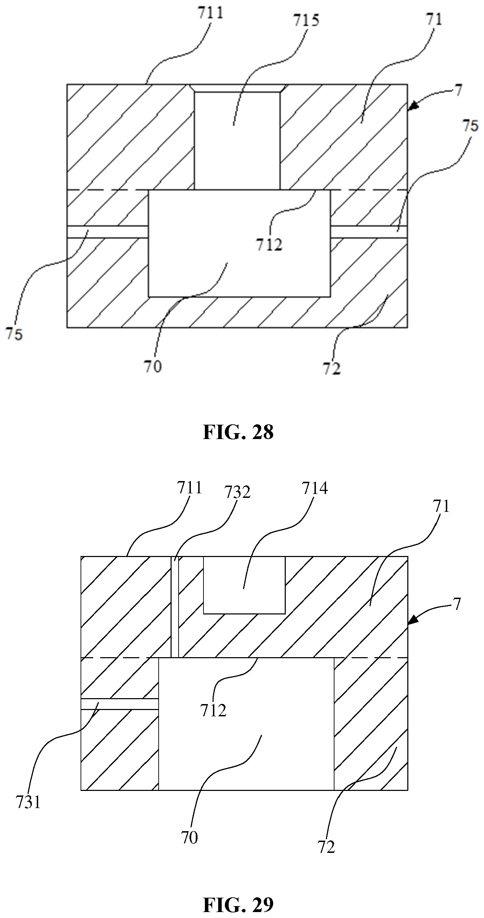

Referring to FIGS. 27 to 30, the shaft position-limiting part 7 includes a fixing portion 71 and a base 72, which are connected to each other. The fixing portion 71 is fixedly or position-limitedly connected to the pump shaft 5, and the base 72 is fixedly or position-limitedly connected to the isolation sleeve 3. Referring to FIG. 28, the base 72 has flow holes 75. Since the base 72 is relatively close to the bottom wall 31, the flow hole 75 in the base 72 allows the working medium to flow into the accommodation cavity 70 rapidly, thereby facilitating an enhanced heat exchange rate between the shaft position-limiting part 7 and the working medium.

In an embodiment, referring to FIG. 27, the fixing portion 71 has flow holes 75. Since the fixing portion 71 is relatively farther away from the bottom wall 31, a larger amount of working medium may be accommodated in the accommodation cavity 70, which increases the heat dissipation area for the working medium, thereby favorably enhancing the heat dissipation effect of the electric pump.

In an embodiment, referring to FIGS. 29 to 30 and FIG. 28, the flow holes 75 include a first flow hole 731 and a second flow hole 732. The base 72 has the first flow hole 731, and the fixing portion 71 has the second flow hole 732. In the direction parallel to the axial direction of the electric pump, the first flow hole 731 is farther away from the pump shaft 5 than the second flow hole 732, that is, the minimum distance between the first flow hole 731 and the pump shaft 5 is greater than that between the second flow hole 732 and the pump shaft 5. Alternatively, the first flow hole 731 is closer to the bottom wall 31 than the second flow hole 732 in the direction parallel to the axial direction of the electric pump. The working medium tends to flow into the accommodation cavity 70 through the first flow hole 731, which is relatively closer to the bottom wall 31. This allows the working medium to flow into the accommodation cavity 70 rapidly, improving the heat exchange rate between the shaft position-limiting part 7 and the working medium. Meanwhile, the working medium flows out of the accommodation cavity 70 through the second flow hole 732, which is relatively farther away from the bottom wall 31. This enables the accommodation cavity 70 to accommodate a larger amount of working medium, which facilitates increasing the heat dissipation area for the working medium, thereby favorably improving the heat dissipation effect of the electric pump.

Referring to FIGS. 27 to 30, the fixing portion 71 includes a first end wall 711 and a second end wall 712. In a direction parallel to the axial direction of the electric pump, the first end wall 711 is farther away from the bottom wall 31 of the isolation sleeve 3 than the second end wall 712. The cavity wall of the accommodation cavity 70 at least includes the second end wall 712 and the inner wall of the fixing portion 71. During the operation of the electric pump, the working medium is accommodated in the isolation chamber 30, and the working medium in the isolation chamber 30 may flow into the accommodation cavity 70. The second end wall 712 and the inner wall of the fixing portion 71 may come into contact with the working medium. Moreover, the second end wall 712, the inner wall of the fixing portion 71 and at least a portion of the outer wall of the shaft position-limiting part 7 may come into contact with the working medium, resulting in a relatively large contact surface area between the shaft position-limiting part 7 and the working medium. This facilitates increasing the heat dissipation area for the working medium, thereby favorably improving the heat dissipation effect of the electric pump.

In an embodiment, referring to FIG. 26, the shaft position-limiting part 7 includes a base 72, which is fixedly or position-limitedly connected to the isolation sleeve 3. The base 72 has a bottom 722, and the isolation sleeve 3 has a bottom wall 31. In a direction parallel to the axial direction of the electric pump, there is a gap between at least a portion of the bottom 722 and the bottom wall 31. The shaft position-limiting part 7 has at least one flow hole 75, which is in communication with both the isolation chamber 30 and the accommodation cavity 70.

Referring to FIGS. 20 to 23, at least a portion of the pump shaft 5 is located in the accommodation cavity 70, and this portion of the pump shaft 5 may come into contact with the working medium within the accommodation cavity 70, which facilitates increasing the heat dissipation area for the working medium, thereby favorably enhancing the heat dissipation effect of the electric pump.

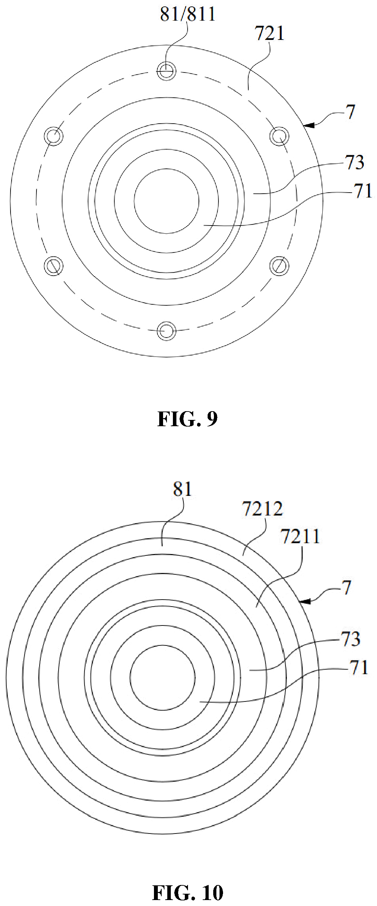

Referring to FIGS. 20 to 23, the pump shaft 5 has a first section 51, a second section 52 and a third section 53. The second section 52 is connected to both the first section 51 and the third section 53. The second section 52 is fixedly or position-limitedly connected to the fixing portion 71. The first section 51 is located in the accommodation cavity 70. During the operation of the electric pump, the first section 51 may come into contact with the working medium within the accommodation cavity 70, which facilitates increasing the heat dissipation area for the working medium, thereby favorably improving the heat dissipation effect of the electric pump. In the axial direction of the electric pump, a distance between the first section 51 and the bottom wall 31 is smaller than a height of the first section 51. Since the second section 52 is connected to the first section 51, the second section 52 may be positioned farther away from the bottom wall 31, which results in a greater axial height of the accommodation cavity 70, enabling the accommodation cavity 70 to have a larger volume. Referring to FIGS. 9 to 11, the pump shaft 5 has a second section 52 and a third section 53 that are connected to each other. The second section 52 is fixedly or position-limitedly connected to the fixing portion 71. The cavity wall of the accommodation cavity 70 includes a bottom wall of the pump shaft 5. During the operation of the electric pump, the bottom wall of the pump shaft 5 may come into contact with the working medium within the accommodation cavity 70, which facilitates increasing the heat dissipation area for the working medium, thereby favorably enhancing the heat dissipation effect of the electric pump.

The second section 52 is fixedly or position-limitedly connected to the fixing portion 71, preventing relative rotation between the pump shaft 5 and the shaft position-limiting part 7. Specifically, the second section 52 is in interference fit with the fixing portion 71 to prevent rotation between the pump shaft 5 and the shaft position-limiting part 7. In other embodiments, the pump shaft 5 may be fixedly connected to the shaft position-limiting part 7 in other manners such as welding to prevent rotation therebetween.

Referring to FIGS. 20 to 25, in the radial direction of the electric pump, a width of the fixing portion 71 is smaller than that of the base 72. The relatively larger radial width of the base 72 allows for a larger contact area between the base 72 and the isolation sleeve 3, which facilitates enhancing the fixing effect of the shaft position-limiting part 7. In other embodiments, referring to FIGS. 12 to 15, in the radial direction of the electric pump, the width of the fixing portion 71 is equal to that of the base 72, resulting in a simpler manufacturing process for the shaft position-limiting part 7.

In an embodiment, referring to FIGS. 27 and 29, the fixing portion 71 has a groove portion 714. The pump shaft 5 is fixedly or position-limitedly connected to the groove portion 714. The groove portion 714 is recessed from the first end wall 711 towards the bottom wall 31, and the groove portion 714 is not in communication with the accommodation cavity 70. Thus, the pump shaft 5 does not come into contact with the working medium within the accommodation cavity 70, which helps prevent corrosion of the pump shaft 5 by the working medium, ensuring the normal operation of the electric pump.

In an embodiment, referring to FIGS. 20 to 25, the fixing portion 71 has a first end wall 711 and a mounting hole 715. The mounting hole 715 extends from the first end wall 711 towards the bottom wall 31, and is in communication with the accommodation cavity 70. The second section 52 of the pump shaft 5 is located in the mounting hole 715, and the bottom wall of the pump shaft 5 may come into contact with the working medium in the accommodation cavity 70, which facilitates increasing the heat dissipation area for the working medium, thereby favorably improving the heat dissipation effect of the electric pump.

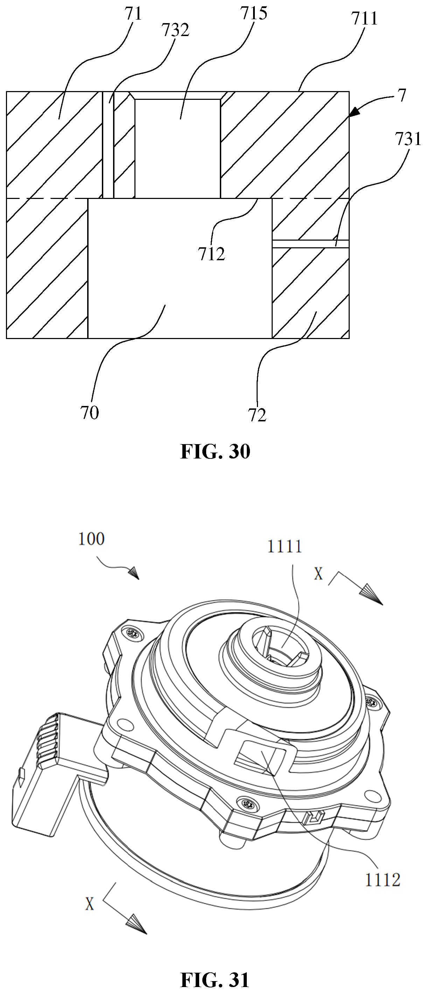

In an embodiment, referring to FIGS. 28 and 30, the fixing portion 71 has a mounting hole 715, which extends through both the first end wall 711 and the second end wall 712, and the mounting hole 715 is in communication with the accommodation cavity 70. The second section 52 of the pump shaft 5 is located in the mounting hole 715, and the bottom wall of the pump shaft 5 may come into contact with the working medium in the accommodation cavity 70, which facilitates increasing the heat dissipation area for the working medium, thereby favorably improving the heat dissipation effect of the electric pump.

Referring to FIGS. 20 to 26, the second section 52 is located in the mounting hole 715. In the radial direction of the electric pump, the width of the mounting hole 715 is denoted as W. In the axial direction of the electric pump, the height of contact between the pump shaft 5 and the shaft position-limiting part 7 is denoted as H (or alternatively, the height of the second division is denoted as H). A ratio of W to H ranges from 1:1 to 3, which facilitates improving the concentricity between the shaft position-limiting part 7 and the pump shaft 5. During the operation of the electric pump, the pump shaft 5 is less prone to oscillation, and exhibits small vibration amplitude and relatively low noise, thereby enhancing the service life of the electric pump.

Referring to FIGS. 20 and 24, the bottom wall 31 of the isolation sleeve 3 includes a first sub-bottom wall 311 and a second sub-bottom wall 312. The second sub-bottom wall 312 is located outside the first sub-bottom wall 311. For example, the second sub-bottom wall 312 is located around an outer periphery of the first sub-bottom wall 311. The base 72 is fixedly or position-limitedly connected to the second sub-bottom wall 312, and the base 72 is in contact with the second sub-bottom wall 312. The cavity wall of the accommodation cavity 70 includes the first sub-bottom wall 311. During the operation of the electric pump, the working medium is contained in the isolation chamber 30, and the first sub-bottom wall 311 may come into contact with the working medium, resulting in a relatively large contact area between the isolation sleeve 3 and the working medium. This facilitates increasing the heat dissipation area for the working medium, thereby favorably improving the heat dissipation effect of the electric pump.

The position-limiting connection mentioned in the present application involves being connected in clearance fit, interference fit and transition fit. The fixed connection involves being connected through welding, bonding, and other connection manners.

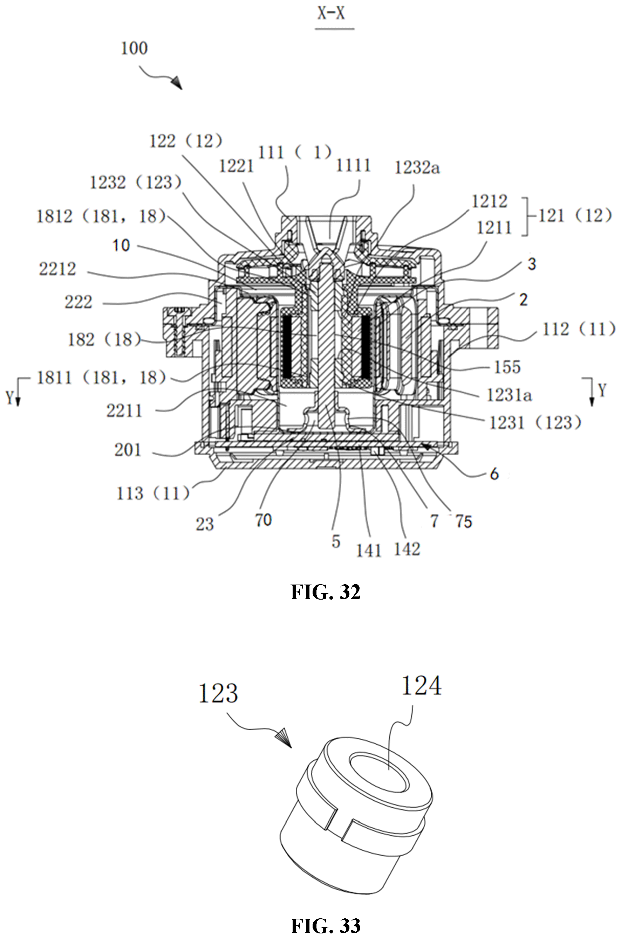

As shown in FIGS. 31 and 32, an electric pump 100 is provided according to the present application, including a pump casing 1, a rotating assembly 12, an isolation sleeve 3 and a pump shaft 5. The stator assembly 2 includes a stator winding, and the stator assembly 2 is fixedly connected to a motor pump housing 112. Specifically, the motor pump housing 112 may be formed by injection molding with at least the stator assembly 2 as an insert. Certainly, an outer sidewall of the stator assembly 2 may be in interference fit with the motor pump housing 112. The isolation sleeve 3 is in position-limiting fit with the inner sidewall of the stator assembly 2. It should be noted that the position-limiting fit here includes, but is not limited to, interference fit, transition fit or clearance fit. The electric pump may further include a control board assembly 6, which is electrically connected to the stator assembly 2 via a pin 21. Certainly, the electric pump may not include the control board assembly 6. In this embodiment, the electric pump 100 includes a control board assembly 6, which is electrically connected to the stator assembly 2 via a pin 21. The pump casing body 111 is fixedly connected to the motor pump housing 112, and a bottom cover 113 is fixedly connected to the motor pump housing 112. Specifically, the bottom cover 113 is welded and fixed to the motor pump housing 112, and the pump casing body 111 is fixedly connected to the motor pump housing 112 by screws. The electric pump 100 has a pump inner chamber 22, in which the rotating assembly 12 is located. The pump inner chamber 22 includes a rotor chamber 101 and an impeller chamber 102, which are in communication with each other. The electric pump has a first chamber 10 and a second chamber 222, which are not in communication with each other. The stator assembly 2 is located in the first chamber 10, and the rotating assembly 12 is located in the second chamber 222. The first chamber 10 is located at one side of the isolation sleeve 3, and a portion of the second chamber 222 is located at the other side of the isolation sleeve 3. The rotating assembly 12 includes a rotor assembly 121 and an impeller assembly 122. The rotor assembly 121 includes a rotor part 1211 and an injection-molded part 1212. The rotor part 1211 includes a permanent magnet, which is arranged inside the injection-molded part 1212. At least a portion of the rotor assembly 121 is arranged in the rotor chamber 101, and the impeller assembly 122 is arranged in the impeller chamber 102. The working medium may flow through the pump inner chamber 22. The electric pump 100 may alternatively be configured without the pump casing body 111, and the pump casing body 111 is integrated with an external structure. Such a configuration facilitates the integrated design of the electric pump 100, resulting in a more compact structure of the electric pump 100, and further facilitating the miniaturization and lightweight of the electric pump 100. The pump casing body 111 has an inlet 1111 and an outlet 1112. The inlet 1111 is configured for the working medium to flow into the electric pump, and the outlet 1112 is configured for the working medium to flow out of the electric pump. When the electric pump 100 is in operation, the electric pump 100 is connected to an external power supply, and an excitation magnetic field generated by the stator winding is controlled by controlling the current flowing through the stator winding. The rotating assembly 12 is rotated around the pump shaft 5 under the action of the excitation magnetic field, so that the working medium entering the pump inner chamber 22 through the inlet 1111 is rotated along with the rotating assembly 12. Due to centrifugal force, the working medium exits the pump inner chamber 22 through the outlet 1112.

Referring to FIGS. 31 to 33, in this embodiment, the electric pump 100 includes a control board assembly 6. The control board assembly 6 includes a base plate 141 and electronic components 142. The electronic components 142 include heat-generating electronic components, which include, but are not limited to, common heat-generating electronic components such as diodes, MOSFETs (Metal-Oxide-Semiconductor Field-Effect Transistors), inductors, resistors, capacitors, and the like. The isolation sleeve 3 is made of a metal material. That is, a wall part of the rotor chamber 101 includes a bottom 201, which is also made of metal material. At least a portion of the control board assembly 6 is in direct or indirect contact with the bottom 201. In a case where at least a portion of the control board assembly 6 is in contact with the bottom 201, specifically, the electric pump 100 includes thermal conductive silicone grease or thermal conductive silica gel 23, which is filled between at least a portion of the control board assembly 6 and the bottom 201. The working medium in the first chamber 10 may dissipate heat from the control board assembly 6 and/or the stator assembly 2. Certainly, the electric pump 100 may be configured without the control board assembly 6. If the control board assembly 6 is not included in the electric pump 100, the working medium in the first chamber 10 may dissipate heat from the stator assembly 2. In order to rapidly dissipate heat from the control board assembly 6 and/or the stator assembly 2, a backflow channel 18 is usually provided, through which the working medium in the rotor chamber 101 may enter the impeller chamber 102, and exit the rotor chamber 101 under the action of the centrifugal force generated during the rotation of the impeller assembly 122. Of course, in other embodiments, the working medium may alternatively enter the rotor chamber 101 through the backflow channel 18.

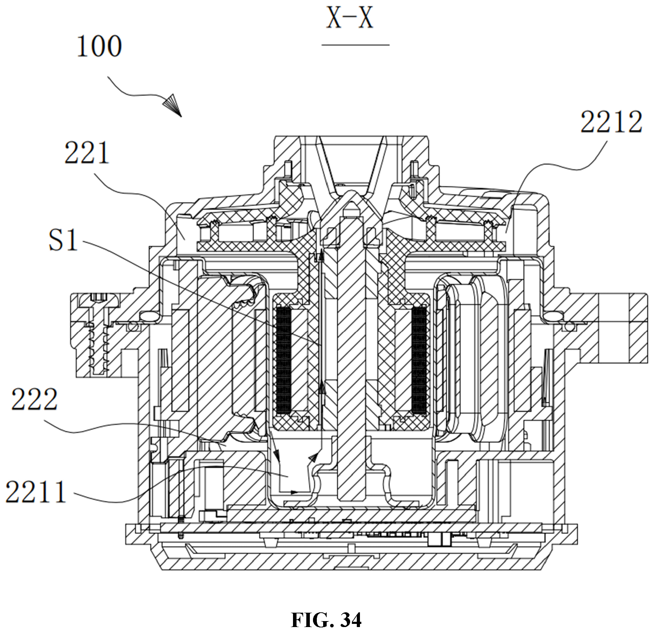

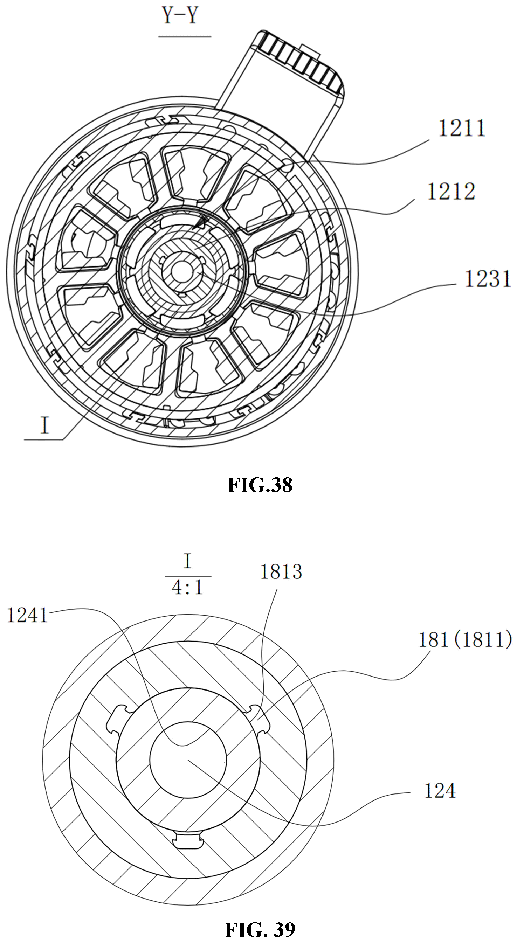

In an embodiment, referring to FIGS. 31 to 34, and FIGS. 38 to 39, an electric pump 100 includes a rotating assembly 12. The rotating assembly 12 includes a rotor assembly 121 having a position-limiting hole 124, and a portion of the pump shaft 5 is located in the position-limiting hole 124. The electric pump 100 has a rotor chamber 101, and the working medium may flow through the rotor chamber 101. At least a portion of the rotor assembly 121 is located in the rotor chamber 101. The electric pump 100 includes a backflow channel 18, which has an overflow channel 181 and an internal flow channel 182 that are in communication with each other. The rotor assembly 121 has at least a portion of the overflow channel 181. In the radial direction of the electric pump 100, there is a gap between a wall part 1813 of the overflow channel 181 and a wall part 1241 of the position-limiting hole 124, and a portion of the rotor assembly 121 is located in the gap. It can also be understood that the overflow channel 181 is not in direct communication with the position-limiting hole 124, and a portion of the pump shaft 5 is located in the internal flow channel 182. A wall part of the internal flow channel 182 includes a portion of an outer sidewall part of the pump shaft 5. In this way, the electric pump 100 has a backflow channel 18, which includes an overflow channel 181 and an internal flow channel 182 that are in communication with each other. The rotor assembly 121 has at least a portion of the overflow channel 181, and the overflow channel 181 is not in direct communication with the position-limiting hole 124, allowing the position-limiting hole 124, which is matched with the pump shaft 5, to form a complete circle in the circumferential direction. When the rotating assembly 12 is rotated around the pump shaft 5, the wall part of the position-limiting hole 124 is provided with sections for being in position-limiting fit with the pump shaft 5 in the circumferential direction, which helps reduce oscillation of the rotating assembly 12, thereby favorably reducing the noise of the electric pump 100. Furthermore, the rotating assembly 12 includes a shaft sleeve 123, which is fixedly or position-limitedly connected to the rotor assembly 121, and the shaft sleeve 123 has a position-limiting hole 124. In this way, firstly, at least a portion of the wall part of the flow channel is arranged in the rotor assembly. Secondly, in the present application, it is unnecessary to remove material from the shaft sleeve 123. It can be understood that at least a portion of the flow channel is not provided in the shaft sleeve 123, which facilitates improving the structural strength of the shaft sleeve 123. Thirdly, the wall part of the internal flow channel 182 includes a portion of an outer sidewall 155 of the pump shaft 5. Since the working medium may flow through the internal flow channel 182, when the rotating assembly 12 is rotated, particularly at a high speed, for example, heat is generated due to the rotational friction between the rotating assembly 12 and the pump shaft 5. The heat generated by the rotating assembly 12 and/or the pump shaft 5 may be transferred to the working medium within the internal flow channel 182, which facilitates heat dissipation from the rotating assembly 12 and/or the pump shaft 5, thereby favorably enhancing the service life of the rotating assembly 12 and/or the pump shaft 5. Fourthly, the shaft sleeve 123 is configured without a backflow channel 18, which reduces the manufacturing difficulty of the shaft sleeve 123, thereby laying a foundation for lowering the production cost of the electric pump. Referring to FIG. 34, a backflow path S1 is shown, through which the working medium within the rotor chamber 101 enters the impeller chamber 102.

In an embodiment, referring to FIGS. 31 to 33, the shaft sleeve 123 includes a first shaft sleeve 1231 and a second shaft sleeve 1232. The rotor assembly 121 includes a rotor part 1211 and an injection-molded part 1212, which is formed by injection molding at least with the rotor part 1211, the first shaft sleeve 1231 and the second shaft sleeve 1232 as inserts. The first shaft sleeve 1231 is located on one side of the internal flow channel 182, and the second shaft sleeve 1232 is located on the opposite side of the internal flow channel 182. The electric pump 100 includes a rotor chamber 101, and at least a portion of the rotor assembly 121 is located in the rotor chamber 101. The working medium may flow through the rotor chamber 101, and the wall part of the rotor chamber 101 includes a bottom 201. The first shaft sleeve 1231 is arranged closer to the bottom 201 than the second shaft sleeve 1232. The wall part of the internal flow channel 182 includes an upper wall part 1231a of the first shaft sleeve 1231, a lower wall part 1232a of the second shaft sleeve 1232, and a portion of the injection-molded part 1212. In this way, firstly, the contact area between the shaft sleeve and the shaft is reduced while reducing the material of the shaft sleeve. Secondly, this facilitates a reduction in the friction area between the shaft and the rotor assembly 121 while ensuring the fitting between the shaft and the rotor assembly, thereby favorably enhancing the service life of the rotor assembly 121 and/or the pump shaft 5.

Furthermore, referring to FIGS. 31 to 34, the first shaft sleeve 1231 and the second shaft sleeve 1232 may be arranged adjacent to each other, and certainly, other configurations are possible. In an embodiment, the overflow channel 181 includes a first overflow channel 1811 and a second overflow channel 1812. The first overflow channel 1811 is located on one side of the internal flow channel 182, and the second overflow channel 1812 is located on the opposite side of the internal flow channel 182. The first overflow channel 1811 is in communication with the second overflow channel 1812 through the internal flow channel 182. In this way, since the internal flow channel 182 is located between the first shaft sleeve 1231 and the second shaft sleeve 1232, it can be understood that the first overflow channel 1811 is in communication with the second overflow channel 1812 via the internal flow channel 182. This arrangement helps reduce the length of the first overflow channel 1811 in the axial direction of the electric pump, as well as the length of the second overflow channel 1812 in the axial direction of the electric pump. Consequently, it facilitates the processing and manufacturing of the first overflow channel 1811 and/or the second overflow channel 1812, thereby reducing the difficulty of manufacturing the first overflow channel 1811 and/or the second overflow channel 1812.

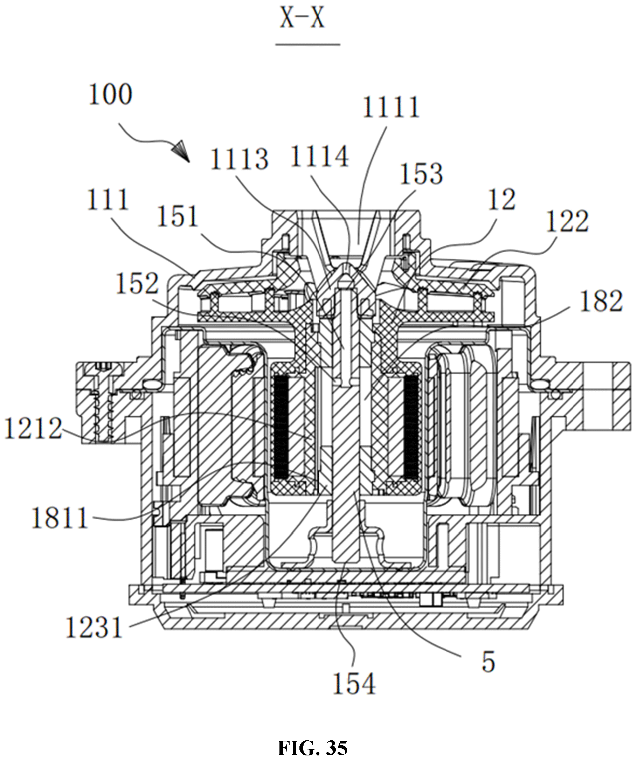

In an embodiment, referring to FIG. 31 and FIG. 35, the first overflow channel 1811 is located radially outside the first shaft sleeve 1231. The wall part of the first overflow channel 1811 includes the outer sidewall part of the first shaft sleeve 1231 and the injection-molded part 1212. Alternatively, the wall part of the first overflow channel 1811 includes the injection-molded part 1212. The second overflow channel 1812 includes an axial hole 151 and a transverse hole 152. The pump shaft 5 includes an upper end 153 and a lower end 154. In the axial direction of the pump shaft 5, the axial hole 151 extends from the upper end 153 towards the lower end 154. One end of the transverse hole 152 is in communication with the axial hole 151, and the other end of the transverse hole 152 is in communication with the internal flow channel 182. In this way, it is beneficial to provide a portion of the overflow channel 181 within the injection-molded part 1212 and the remaining portion within the pump shaft 5. This arrangement facilitates reducing the difficulty of injection molding of the rotating assembly 12.

Referring to FIG. 35, a bypass channel 1114 may pass through the support part 1113 to communicate with the inlet 1111. Certainly, the bypass channel 1114 may be provided within the impeller assembly 122. Furthermore, in an embodiment, the electric pump 100 includes a pump casing 11, which has a support part 1113, and the support part 1113 is in position-limiting fit with the pump shaft 5. The pump casing 11 has the inlet 1111, and the support part 1113 has the bypass channel 1114. One end of the bypass channel 1114 is in communication with the axial hole 151, and the other end of the bypass channel 1114 is in communication with the inlet 1111. In this way, the bypass channel 1114 is provided within the support part 1113 of the pump casing 11, so that the impact of the bypass channel 1114 on the impeller assembly 122 is minimized.

In an embodiment, referring to FIGS. 31 to 34, the first overflow channel 1811 is located radially outside the first shaft sleeve 1231. The wall part of the first overflow channel 1811 includes the outer sidewall part of the first shaft sleeve 1231 and the injection-molded part 1212. Alternatively, the wall part of the first overflow channel 1811 includes the injection-molded part 1212. The second overflow channel 1812 is located radially outside the second shaft sleeve 1232. The wall part of the second overflow channel 1812 includes the outer sidewall part 155 of the second shaft sleeve 1232. Alternatively, the wall part of the second overflow channel 1812 includes the injection-molded part 1212. One end of the second overflow channel 1812 is in communication with the internal flow channel 182. In this way, compared with an arrangement in which a portion of the overflow channel 181 is not provided within the pump shaft 5, it not only enables the circulation of the working medium within the rotor chamber 101, but also enhances the structural strength of the pump shaft 5, further laying a foundation for improving the service life of the electric pump.

In an embodiment, referring to FIG. 31 to FIG. 34, the electric pump 100 includes a pump casing 11, which has an inlet 1111. The rotating assembly 12 includes an impeller assembly 122, which has an inflow channel 110. One end of the inflow channel 110 is in communication with the second overflow channel 1812, and the other end of the inflow channel 110 is in communication with the inlet 1111. In this way, it is unnecessary to provide a bypass channel 1114 within the support part 1113 of the pump casing 11. Instead, the unique structure of the impeller assembly 122 directly facilitates the communication between the second overflow channel 1812 and the inlet 1111, which helps simplify the structure of the electric pump 100.

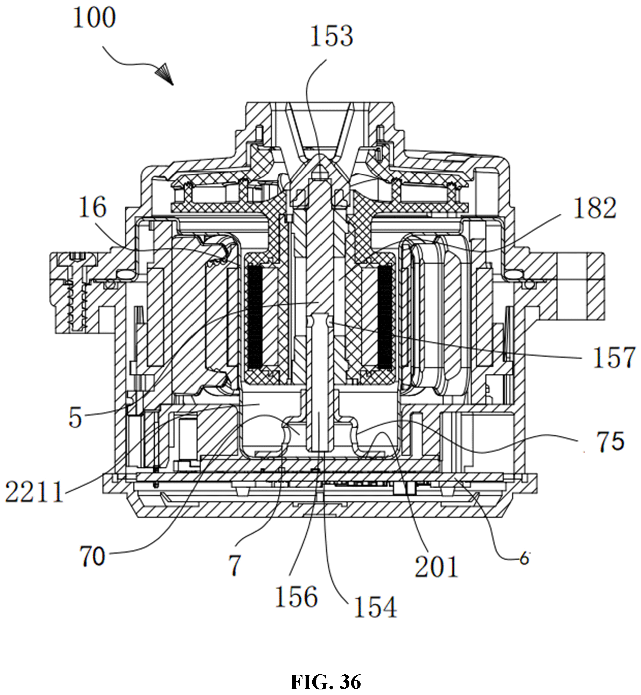

In an embodiment, referring to FIG. 31 and FIG. 36, the electric pump 100 includes a shaft position-limiting part 7 having an accommodation cavity 70, and the wall part of the rotor chamber 101 includes a bottom 201. The pump shaft 5 is fixed to the bottom 201 via the shaft position-limiting part 7. The pump shaft 5 includes a vertical hole 156 and transverse grooves 157, and includes an upper end 153 and a lower end 154. In the axial direction of the pump shaft 5, the vertical hole 156 extends from the lower end 154 towards the upper end 153. One end of the vertical hole 156 is in communication with the accommodation cavity 70, and the other end of the vertical hole 156 is in communication with the internal flow channel 182 via the transverse groove 157. The accommodation cavity 70 is in communication with the rotor chamber 101. This configuration not only achieves a fixed connection between the pump shaft 5 and the isolation sleeve 3, but also increases the contact area between the working medium and the bottom, thereby facilitating heat dissipation for the control board assembly 6.

Referring to FIG. 31 and FIG. 36 again, in order to facilitate the rapid circulation of the working medium within the accommodation cavity 70 and thereby enhance the circulation rate of the working medium at the bottom of the rotor chamber 101, the shaft position-limiting part 7 is further provided with a flow hole 75. The flow hole 75 extends through a wall part of the accommodation cavity 70 in a thickness direction of the wall part of the accommodation cavity 70. One end of the flow hole 75 is in communication with the accommodation cavity 70, and the other end of the flow hole 75 is in communication with the rotor chamber 101. In this way, the working medium within the accommodation cavity 70 may be effectively introduced into the rotor chamber 101, which facilitates a rapid circulation rate of the working medium at the bottom of the rotor chamber 101, thereby enhancing heat dissipation for the control board assembly 6.

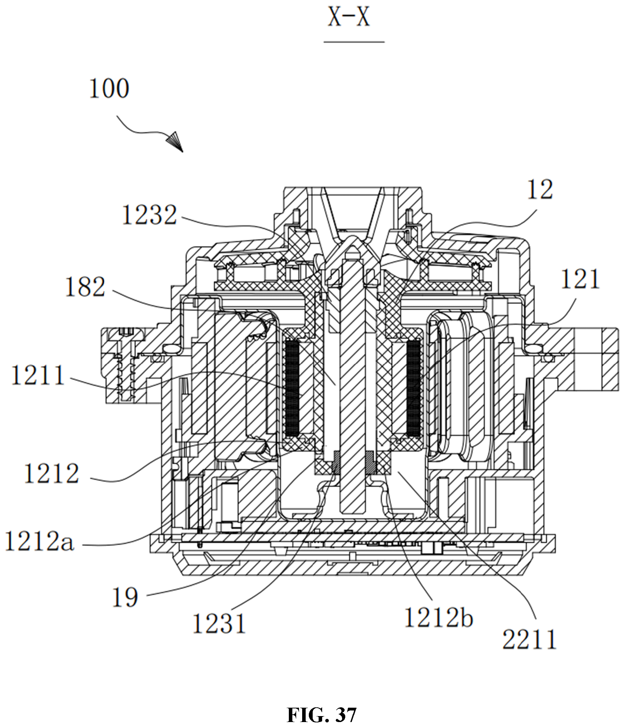

In another embodiment, referring to FIGS. 31 and 37, the injection-molded part 1212 includes a first part 1212a and a second part 1212b. At least a portion of the rotor part 1211 is located in the first part 1212a, and at least a portion of the first shaft sleeve 1231 is located in the second part 1212b. A radial dimension of the first part 1212a is smaller than that of the second part 1212b. The internal flow channel 182 extends in the axial direction of the electric pump 100 towards the first part 1212a, and the wall part of the internal flow channel 182 includes the first part 1212a. The electric pump 100 has a water-flow groove 19, one end of the water-flow groove 19 is in communication with the rotor chamber 101, and the other end of the water-flow groove 19 is in communication with the internal flow channel 182. Specifically, the water-flow groove 19 is disposed between the first shaft sleeve 1231 and the second shaft sleeve 1232. This arrangement helps increase the capacity of the internal flow channel 182 to store the working medium, thereby facilitating heat dissipation for the rotor assembly 121. Additionally, this arrangement also increases the length of both the first shaft sleeve 1231 and the second shaft sleeve 1232 in the axial direction, reducing the oscillation of the rotating assembly 12 during the operation of the electric pump 100. It should be noted that the above-mentioned "radial direction" is perpendicular to the axial direction of the electric pump 100, and the axial direction of the electric pump 100 refers to the direction in which the central line of the shaft of the electric pump 100 extends.

It should be noted that the above embodiments are only used to illustrate the present application and are not intended to limit the technical solutions described in the present application. Although the present application has been described in detail in this specification with reference to the above embodiments, it should be understood by those skilled in the art that modifications or equivalent substitutions may still be made to the present application, and all technical solutions and improvements thereof that do not depart from the spirit and scope of the present application should fall within the scope claimed by the claims of the present application.

## Claims

1. An electric pump, comprising a rotor assembly (4), a pump shaft (5), a shaft position-limiting part (7) and an isolation sleeve (3), wherein
the rotor assembly (4) is arranged on a circumferential side of the pump shaft (5), and the pump shaft (5) is fixedly or position-limitedly connected to the shaft position-limiting part (7);
the shaft position-limiting part (7) comprises a first welding part (81), and the isolation sleeve (3) comprises a bottom (32), which has a second welding part (82) welded and fixed to the first welding part (81);
the bottom (32) has a first end face (321) and a second end face (322), wherein in a direction parallel to an axial direction of the electric pump, the first end face (321) is positioned closer to the shaft position-limiting part (7) than the second end face (322), an area of a projection of the second welding part (82) onto the first end face (321) is smaller than that of a projection of the shaft position-limiting part (7) onto the first end face (321), and there is a distance between the second welding part (82) and the second end face (322).

2. The electric pump according to claim 1, wherein the shaft position-limiting part (7) has a third end face (721), with an extension direction of the first end face (321) being parallel to that of the third end face (721),
the first welding part (81) extends from the third end face (721) in a direction away from the shaft position-limiting part (7), and
in the direction parallel to the axial direction of the electric pump, an area of a projection of the first welding part (81) onto the third end face (721) is smaller than an area of the third end face (721).

3. The electric pump according to claim 2, wherein in the direction parallel to the axial direction of the electric pump, the first welding part (81) has a first distance, and a distance from the first end face (321) to the second end face (322) is defined as a second distance, with a ratio of the first distance to the second distance ranging from 0.6 to 2.

4. The electric pump according to claim 2, wherein the first welding part (81) comprises a plurality of first welding protrusions (811), and a projection of each of the first welding protrusions (811) onto the third end face (721) is circular or polygonal in shape; or
projections of the first welding protrusions (811) onto the third end face (721) lie on a circle or polygon; or
the projection of the first welding part (81) onto the third end face (721) is circular or polygonal in shape.

5. The electric pump according to claim 3, wherein the first welding part (81) comprises a plurality of first welding protrusions (811), and a projection of each of the first welding protrusions (811) onto the third end face (721) is circular or polygonal in shape; or
projections of the first welding protrusions (811) onto the third end face (721) lie on a circle or polygon; or
the projection of the first welding part (81) onto the third end face (721) is circular or polygonal in shape.

6. The electric pump according to claim 1, wherein the second welding part (82) extends from the first end face (321) in a direction away from the second end face (322), and in a direction parallel to the axial direction of the electric pump, the area of the projection of the second welding part (82) onto the first end face (321) is smaller than an area of the first end face (321).

7. The electric pump according to claim 6, wherein the shaft position-limiting part (7) comprises a base (72), which has a third end face (721), an extension direction of the third end face (721) is parallel to that of the first end face (321), and in the direction parallel to the axial direction of the electric pump, a thickness of the second welding part (82) is smaller than that of the base (72).

8. The electric pump according to claim 5, wherein the second welding part (82) comprises a plurality of second welding protrusions (821), and a projection of each of the second welding protrusion (821) onto the first end face (321) is circular or polygonal in shape; or
projections of the second welding protrusions (821) onto the first end face (321) lie on a circle or a polygon; or
the projection of the second welding part (82) onto the first end face (321) is circular or polygonal in shape.

9. The electric pump according to claim 6, wherein the second welding part (82) comprises a plurality of second welding protrusions (821), and a projection of each of the second welding protrusions (821) onto the first end face (321) is circular or polygonal in shape; or
projections of the second welding protrusions (821) onto the first end face (321) lie on a circle or a polygon; or
the projection of the second welding part (82) onto the first end face (321) is circular or polygonal in shape.

10. The electric pump according to claim 1, wherein the shaft position-limiting part (7) covers a portion of the first end face (321), and the shaft position-limiting part (7) comprises a base (72), which is fixedly connected to the bottom (32), with a thickness of the bottom (32) being smaller than that of the base (72).

11. The electric pump according to claim 2, wherein the shaft position-limiting part (7) covers a portion of the first end face (321), and the shaft position-limiting part (7) comprises a base (72), which is fixedly connected to the bottom (32), with a thickness of the bottom (32) being smaller than that of the base (72).

12. A method for assembling an electric pump, comprising:
obtaining a shaft position-limiting part (7) and an isolation sleeve (3); and
fixedly connecting the shaft position-limiting part (7) to the isolation sleeve (3) by welding a first welding part (81) of the shaft position-limiting part (7) to a second welding part (82) of the isolation sleeve (3), so that a portion of a bottom (32) of the isolation sleeve (3) is melted in a direction parallel to an axial direction of the electric pump during welding.

13. The method for assembling an electric pump according to claim 12, comprising: obtaining a pump shaft (5), and fixedly or position-limitedly connecting the pump shaft (5) to the shaft position-limiting part (7), wherein
when fixedly connecting the shaft position-limiting part (7) to the isolation sleeve (3), a first welding electrode and a second welding electrode are provided to come into contact with the isolation sleeve (3) and the pump shaft (5) respectively.

14. The electric pump according to any one of claims 1 to 11, comprising an isolation sleeve (3), a rotor assembly (4), a pump shaft (5) and a shaft position-limiting part (7), wherein
the rotor assembly (4) is arranged on a circumferential side of the pump shaft (5), the isolation sleeve (3) is fixedly or position-limitedly connected to the shaft position-limiting part (7), the isolation sleeve (3) has an isolation chamber (30), the rotor assembly (4) and at least a portion of the pump shaft (5) are located in the isolation chamber (30), and the shaft position-limiting part (7) has an accommodation cavity (70), which is in communication with the isolation chamber (30).

15. The electric pump (100) according to any one of claims 1 to 11, comprising a rotating assembly (12) and a pump shaft (15), wherein
the rotating assembly (12) comprises a rotor assembly (121) having a position-limiting hole (124), and a portion of the pump shaft (15) is located in the position-limiting hole (124);
the electric pump (100) has a rotor chamber (101), wherein the rotor chamber (101) is configured for a working medium to circulate therein, and at least a portion of the rotor assembly (121) is located in the rotor chamber (101);
the electric pump (100) comprises a backflow channel (18), which has an overflow channel (181), wherein the overflow channel (181) is located radially outside the position-limiting hole (124) in a radial direction of the electric pump (100); and
the rotating assembly (12) comprises a shaft sleeve (123), with the overflow channel (181) being located radially outside the shaft sleeve (123).
